# EUROPEAN PATENT SPECIFICATION

(11) **EP 2 706 843 B1**
(45) Date of publication and mention of the grant of the patent: **04.03.2015**
(21) Application number: 12720177.0
(22) Date of filing: 10.05.2012
(51) Int. Cl.: A01N 47/20, A01N 57/20, A01N 25/04, A01N 25/00, A01N 25/10, A01N 47/24

(54) **ACRYLATE-ACRYLAMIDE-AMPS TERPOLYMER AS DISPERSANT FOR AGROCHEMICAL FORMULATIONS**
ACRYLSÄURE-ACRYLAMID-AMPS-TERPOLYMER ALS DISPERGIERMITTEL FÜR AGROFORMULIERUNGEN
TERPOLYMÈRE D'ACIDE ACRYLIQUE-ACRYLAMIDE-AMPS EN TANT QU'AGENT DISPERSANT POUR FORMULES AGRICOLES

(30) Priority: 13.05.2011 US 201161485714 P; 13.05.2011 EP 11166130
(43) Date of publication of application: 19.03.2014
(73) Proprietor: BASF SE, 67056 Ludwigshafen (DE)
(72) Inventor: SCHNABEL, Gerhard, 63820 Elsenfeld (DE); WIRSCHEM, Ruth, 68159 Mannheim (DE); KLINGELHOEFER, Paul, 68165 Mannheim (DE); CARDOSO, Lucelena Patricio, 12521-900 Guaratingueta-SP (BR); URTEL, Bolette, 67240 Bobenheim-Roxheim (DE)
(86) International application number: PCT/EP2012/058591
(87) International publication number: WO 2012/156257

(56) References cited:
- WO-A1-03/055304
- WO-A2-2010/063672
- RU-C2- 2 250 923

## Description

The present invention relates to a composition comprising an agrochemical active substance and a random terpolymer which comprises the monomers i), ii), iii) and optionally further monomers incorporated into the polymer, where
monomer i) comprises an olefinically unsaturated monomer comprising a sulfonic acid group and/or a salt thereof,
monomer ii) comprises (meth)acrylamide and/or an N-substituted derivative thereof, and
monomer iii) comprises a monoethylenically unsaturated C₃-C₈-carboxylic acid, an anhydride and/or a salt thereof wherein the terpolymer comprises 5 to 80% by weight of monomer i), 5 to 80% by weight of monomer ii), and 20 to 90% by weight of monomer iii), based on the total mass of all monomers of the terpolymer.

The invention furthermore relates to a process for the preparation of this composition; to the use of this composition for dispersing agrochemical active substances; to a non-therapeutical method of controlling phytopathogenic fungi and/or undesired plant growth and/or undesired insect or mite attack and/or for regulating the growth of plants, wherein the composition is allowed to act on the respective pests, their environment or the plants to be protected from the respective pest, on the soil and/or on undesired plants and/or on the crop plants and/or their environment; and furthermore to seed comprising the composition. The present invention comprises combinations of preferred features with other preferred features.

A wide range of polymers are known as dispersants for agricultural formulations:
WO 2003/055305 discloses an aqueous plant protection formulation comprising a pesticide and a polymer based on a) acrylamidopropylmethylenesulfonic acid, b) a macromonomer and optionally c) a comonomer such as, for example, acrylamide or acrylic acid.
WO 2005/046328 and WO 2010/063672 disclose active substance formulations comprising copolymer composed of an olefinically unsaturated sulfonic acid and further olefinically unsaturated monomers.
WO 2003/055304 discloses aqueous suspensions of agroformulations comprising a copolymer of acrylamidopropylmethylensulfonic acid (AMPS) and a macromonomer.

Disadvantages of the prior art are, inter alia, that no high storage stability of the formulation is achieved; that the particle size growth of dispersed agrochemical active substances is not slowed down or suppressed; that the agglomeration of dispersed agrochemical active substances is not slowed down or suppressed; that the settling of dispersed agrochemical active substances is not slowed down or suppressed; and that abovementioned advantages manifest themselves in particular in the presence of high salt concentrations. It was therefore an object to overcome these disadvantages.

The object was achieved by a composition comprising an agrochemical active substance and a random terpolymer which comprises the monomers i), ii), iii) and optionally further monomers incorporated into the polymer, where
monomer i) comprises an olefinically unsaturated monomer comprising a sulfonic acid group and/or a salt thereof,
monomer ii) comprises (meth)acrylamide and/or an N-substituted derivative thereof, and
Monomer iii) comprises a monoethylenically unsaturated C₃-C₈-carboxylic acid, an anhydride and/or a salt thereof wherein the terpolymer comprises 5 to 80% by weight of monomer i), 5 to 80% by weight of monomer ii), and 20 to 90% by weight of monomer iii), based on the total mass of all monomers of the terpolymer.

The term "random terpolymer" usually means that the incorporation of at least three different monomers into the resulting terpolymer is randomly distributed. Usually, the random terpolymer is a free-radical polymer, in other words a polymer prepared from monomers by free-radical polymerization.

Suitable examples of monomer i) are sulfonic acid monomers of the formula I and/or salts thereof, 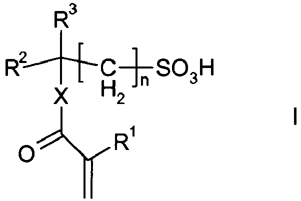 where
- X: is oxygen or NR⁴,
- n: can have a value from 0 to 10 and
- R¹: is hydrogen or methyl,
- R² and R³: independently of one another are hydrogen or C₁- to C₆-alkyl,
- R⁴: is hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl, alkylarylaminoaryl.

The sulfonic acids of the formula I may be present in acid or salt form or as a mixture of acid and salt form. Salts of the sulfonic acid monomers are in most cases metal salts, in particular alkali metal salts (such as lithium, sodium or potassium salts) or ammonium salts.

X is preferably oxygen or NH, with oxygen being especially preferred.
n preferably has a value of from 0 to 4, in particular 1.
R² and R³ independently of one another are preferably hydrogen or C₁-C₄-alkyl, in particular hydrogen or methyl.

Especially suitable as monomer i) is acrylamido-2-methylpropanesulfonic acid (AMPS) and 2-sulfoethyl methacrylate (SEMA) and/or their salts. AMPS and/or its salts is especially suitable.

Suitable examples of monomer ii) are amides of the formula II, 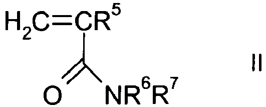 where
- R⁵: is hydrogen or methyl,
- R⁶ and R⁷: independently of one another are hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl, alkylarylaminoaryl.

R⁵ is preferably hydrogen. R⁶ and R⁷ independently of one another are preferably hydrogen or C₁-C₁₂-alkyl, in particular hydrogen.

Preferred as monomer ii) are acrylamide and methacrylamide, specifically acrylamide.

Monomers iii) usually comprises at least one monoethylenically unsaturated C₃-C₈-carboxylic acid, an anhydride of a monoethylenically unsaturated C₃-C₈-carboxylic acid and/or a salt of a monoethylenically unsaturated C₃-C₈-carboxylic acid. Suitable salts are alkali metal salts and ammonia salts, preferably the sodium and potassium salts.

Preferred unsaturated C₃-C₈-carboxylic acids are, in particular, acrylic acid, methacrylic acid, ethacrylic acid, vinyl acetic acid, allyl acetic acid, crotonic acid, maleic acid, fumaric acid, mesaconic acid and itaconic acid. In as far as the abovementioned unsaturated C₃-C₈-carboxylic acids are capable of forming anhydrides, the latter also are suitable as monomers iii), for example maleic anhydride, itaconic anhydride and methacrylic anhydride. The anhydrides frequently readily hydrolyse during the polymerization in aqueous solution or upon formulation in water and thus give rise to the corresponding acids.

Preferred monomers iii) are acrylic acid and/or methacrylic acid, with acrylic acid being especially preferred.

In a preferred embodiment, the terpolymer comprises the monomers i), ii), iii) and optionally further monomers incorporated into the polymer, with monomer i) being AMPS and/or SEMA and/or salts thereof, monomer ii) being acrylamide and/or methacrylamide, and monomer iii) being acrylic acid and/or methacrylic acid and/or salts thereof.

The terpolymer may optionally comprise further monomers incorporated in the polymer, such as up to 10 wt%, preferably up to 5 wt%, more preferabyl up to 1 wt%, and in particular up to 0,08 wt%, based on the total mass of all monomers of the terpolymer.

Further monomers which may be present are, for example, vinylaromatic monomers such as styrene and styrene derivatives, such as α-methylstyrene, vinyltoluene, ortho-, meta- and para-methylstyrene, ethylvinylbenzene, vinylnaphthalene, vinylxylene and the corresponding halogenated vinylaromatic monomers, vinylaromatic monomers which bear nitro, alkoxy, haloalkyl, carbalkoxy, carboxy, amino and alkylamino groups, α-olefins, such as ethene, propene, 1-butene, 1-pentene, 1-hexene, isobutene, long-chain (C10-C20)-alkyl-α-olefins, dienes such as butadiene and isoprene, vinyl alcohol esters such as vinyl acetate, vinyl halides such as vinyl chloride, vinyl bromide, vinyl fluoride, vinylidene chloride, vinylidene fluoride, vinylidene bromide, vinylnitrile, vinyl carboxylates, 1-vinylamides such as 1-vinylpyrrolidone, 1-vinylpiperidone, 1-vinylcaprolactam, 1-vinylformamide, 1-vinylacetamide or 1-methyl-1-vinylacetamide, N-vinylimidazole, C₁-C₂₄-alkylesters and monosubstituted and disubstituted and unsubstituted C₁- to C₂₄-alkylamides of monoethylenically unsaturated monomers such as acrylic acid, methacrylic acid, fumaric acid, maleic acid and itaconic acid, vinylsulfonic acid, anhydrides such as maleic anhydride, unsaturated aldehydes such as acrolein, unsaturated ethers such as 1,4-cyclohexanedimethanol divinyl ether, 1,4-cyclohexanedimethanol monovinyl ether, butanediol divinyl ether, butanediol monovinyl ether, cyclohexyl vinyl ether, diethylene glycol divinyl ether, ethylene glycol monovinyl ether, ethyl vinyl ether, methyl vinyl ether, n-butyl vinyl ether, octadecyl vinyl ether, triethylene glycol vinyl methyl ether, vinyl isobutyl ether, vinyl 2-ethylhexyl ether, vinyl propyl ether, vinyl isopropyl ether, vinyl dodecyl ether, vinyl tert.-butyl ether, hexanediol divinyl ether, hexanediol monovinyl ether, diethylene glycol monovinyl ether, diethylaminoethyl vinyl ether, polytetrahydrofuran-290 divinyl ether, tetraethylene glycol divinyl ether, ethylene glycol butyl vinyl ether, ethylene glycol divinyl ether, triethylene glycol divinyl ether, trimethylolpropane trivinyl ether, aminopropyl vinyl ether.

In a preferred form the further monomers are free of macromonomers, such as those defined in claim 1 as monomer B) of WO 03/055304 and/or as defined in claim 1 as monomer B) of US2006142159. More preferably, the further monomers are free of macromonomers according to formula (II)

R₁₁-Y-(R₁₂ -O)ₓ(R₁₄-O)_{z}-R₁₃ (III)

wherein R₁₁ is a vinyl, allyl, acryloyl, methacryloyl, senecioyl or crotonyl residue; R₁₂ and R₁₄ are, independently of one another, (C₂-C₄)-alkylene;
x and z are, independently of one another, a whole number between 0 and 500, with x+z greater than or equal to 1; Y is O, S, PH or NH; and R₁₃ is hydrogen or a saturated or unsaturated, linear or branched, aliphatic, cycloaliphatic or aromatic (C₁-C₁₀₀)-hydrocarbon residue.

The terpolymer is preferably free of poly(alkylene glycol) units, such as polyethylene glykol units, and/or polypropylene glykol units. The terpolymer is preferably free of ether groups. Typically, the terpolymer is not a comb polymer.

The terpolymer usually comprises at least 3% by weight and preferably at least 10% by weight of monomer i). The terpolymer usually comprises no more than 80% by weight and preferably no more than 50% by weight of monomer i). The terpolymer usually comprises from 5 to 80% by weight, preferably from 6 to 60% by weight, especially preferably from 7 to 40% by weight and specifically from 10 to 30% by weight of monomer i). The data in % by weight of monomer i) relate in each case to the total weight of all monomers of the terpolymer.

The terpolymer usually comprises at least 3% by weight and preferably at least 10% by weight of monomer ii). The terpolymer usually comprises no more than 80% by weight and preferably no more than 50% by weight of monomer ii). The terpolymer usually comprises from 5 to 80% by weight, preferably from 6 to 60% by weight, especially preferably from 7 to 40% by weight and specifically from 10 to 30% by weight of monomer ii). The data in % by weight of monomer ii) relate in each case to the total weight of all monomers of the terpolymer.

The terpolymer usually comprises at least 20% by weight and preferably at least 35% by weight of monomer iii). The terpolymer usually comprises no more than 90% by weight and preferably no more than 80% by weight of monomer iii). The terpolymer usually comprises from 25 to 90% by weight, preferably from 35 to 85% by weight, especially preferably from 40 to 80% by weight and specifically from 45 to 70% by weight of monomer iii). The data in % by weight of monomer iii) relate in each case to the total weight of all monomers of the terpolymer.

The terpolymer usually comprises in total no more than 95% by weight, preferably no more than 90% by weight and especially preferably no more than 85% by weight of monomer i) and monomer iii). The terpolymer usually comprises in total at least 20% by weight, preferably at least 40% by weight, especially preferably at least 50% by weight and in particular at least 60% by weight of monomer i) and monomer iii). The data in % by weight of the total of monomer i) and iii) relate in each case to the total weight of all monomers of the terpolymer.

The terpolymer typically comprises from 2 to 40% by weight of monomer i) (such AMPS), from 5 to 50% by weight of monomer ii) (such as acrylamide), and as the remainder monomer iii) (such as (meth)acrylate) and/or further monomers. The terpolymer preferably comprises from 4 to 30% by weight of monomer i) (such AMPS), from 10 to 40% by weight of monomer ii) (such as acrylamide), and as the remainder monomer iii) (such as (meth)acrylate) and/or further monomers.

The total of the monomers i), ii), iii) and of the further monomers normally gives 100% by weight.

The terpolymers and their preparation are known, for example from DE 3743739 A1, page 3, line 25 to page 3, line 57. The terpolymers are preferably synthesized in the usual manner by means of free-radical polymerization. However, it is also possible to employ other processes for the polymerization, for example controlled free-radical processes. The polymerization is carried out in the presence of the monomers and of one or more initiators and can be carried out with or without solvent, in emulsion or in suspension. The polymerization can be carried out as a batch reaction, as a semicontinuous operation or as a continuous operation. The reaction times are generally in the range of between 1 and 12 hours. The temperature range within which the reactions can be carried out is generally from 20 to 200°C, preferably from 40 to 120°C.

The initiators which are employed for the free-radical polymerization are customary free-radical-forming substances. Preferred is the initiator from the group of the heat-activatable polymerization initiators. These are initiators with a decomposition temperature in the range of from 20 to 180°C, in particular 50 to 120°C, preferred. Examples of suitable thermal initiators are inorganic peroxo compounds such as peroxodisulfates (ammonium and, preferably, sodium peroxodisulfate), peroxosulfates, percarbonates and hydrogen peroxide; organic peroxo compounds such as diacetyl peroxide, di-tert.-butyl peroxide, diamyl peroxide, dioctanoyl peroxide, didecanoyl peroxide, dilauroyl peroxide, dibenzoyl peroxide, bis(o-toloyl)peroxide, succinyl peroxide, tert.-butyl perneodecanoate, tert.-butyl perbenzoate, tert.-butyl perisobutyrate, tert.-butyl perpivalate, tert.-butyl peroctoate, tert.-butyl perneodecanoate, tert.-butyl perbenzoate, tert.-butyl peroxide, tert.-butyl hydroperoxide, cumene hydroperoxide, tert.-butyl peroxy-2-ethylhexanoate and diisopropyl peroxydicarbamate; azo compounds such as 2,2'-azobisisobutyronitrile, 2,2'-azobis(2-methylbutyronitrile) and azobis(2-amidopropane) dihydrochloride. These initiators can be employed in combination with reducing compounds as initiator/regulator systems. Examples of such reducing compounds which may be mentioned are phosphorus-comprising compounds, such as phosphorous acid, hypophosphites and phosphinates, sulfur-comprising compounds such as sodium hydrogen sulfite, sodium sulfite and sodium formaldehyde sulfoxylate, and hydrazine.

Frequently, one also uses redox initiator systems, which consist of a peroxo compound, a metal salt and a reducing agent. Examples of suitable peroxo compounds are hydrogen peroxide, peroxodisulfate (as the ammonium, sodium or potassium salt), peroxosulfates and organic peroxo compounds such as tert.-butyl hydroperoxide, cumene hydroperoxide or dibenzoyl peroxide. Suitable metal salts are mainly iron(II) salts such as iron(II) sulfate heptahydrate. Suitable reducing agents are sodium sulfite, the disodium salt of 2-hydroxy-2-sulfinatoacetic acid, the disodium salt of 2-hydroxy-2-sulfonatoacetic acid, sodium hydroxymethanesulfinate, ascorbic acid, iso-ascorbic acid or mixtures of these.

It is preferred to employ thermal initiators, with inorganic peroxo compounds, in particular sodium peroxodisulfate, being preferred. It is especially advantageous to employ, as redox initiator system, the peroxo compounds in combination with sulfur- or phosphorus-comprising reducing agents, in particular sodium hydrogen sulfite or sodium hypophosphite.

The free-radical polymerization is preferably carried out in solution. Solvents are either one, or a combination of two or more, solvent(s). These are, for example, water, alcohols such as, for example, methanol, ethanol, isopropanol, dipolar-aprotic solvents such as, for example, DMF, DMSO or NMP, aromatic, aliphatic, halogenated or nonhalogenated hydrocarbons such as, for example, hexane, chlorobenzene, toluene or benzene. Preferred solvents are water, isopropanol, methanol, toluene, DMF, NMP, DMSO and hexane. Especially preferred are water and isopropanol.

The molar mass Mw of the terpolymer is usually in the range of from 500 to 100 000 g/mol, preferably from 1000 to 50 000 g/mol. The molar masses Mw and Mn and the polydispersity of the polymers are determined by size-exclusion chromatography. Commercially available PMMA-standard units may be used as the calibration material.

The terpolymer is usually soluble in water, for example to at least 5 g/l at 20°C (preferably to at least 20 g/l, in particular at least 50 g/l). The terpolymer is preferably present in dissolved form in the composition according to the invention.

The composition according to the invention usually comprises at least 0.1 % by weight, preferably at least 1 % by weight and in particular at least 2% by weight of the terpolymer. The composition according to the invention usually comprises from 0.1 to 25% by weight, preferably from 0.5 to 15% by weight and in particular from 1 to 10% by weight of the terpolymer.

Suitable agrochemical active substances are pesticides and inorganic fertilizers.

The term pesticides refers to at least one active substance selected from the group of the fungicides, insecticides, nematicides, herbicides, safeners and/or growth regulators. Preferred pesticides are fungicides, insecticides, herbicides and growth regulators. Especially preferred pesticides are herbicides. Mixtures of pesticides from two or more of the abovementioned classes may also be used. The skilled worker is familiar with such pesticides, which can be found, for example, in Pesticide Manual, 15th Ed. (2009), The British Crop Protection Council, London. The following pesticides are suitable, by way of example (pesticides A) to K) are fungicides):
A) Respiration inhibitors
   - complex-III-inhibitors at the Qₒ-site (for example strobilurins): azoxystrobin, coumethoxystrobin, coumoxystrobin, dimoxystrobin, enestroburin, fenaminstrobin, fenoxy-strobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, methyl 2-[2-(2,5-dimethylphenyloxymethyl)phenyl]-3-methoxyacrylate, 2-(2-(3-(2,6-dichlorophenyl)-1-methylallylideneaminooxymethyl)phenyl)-2-methoxyimino-N-methylacetamide, pyribencarb, triclopyricarb/chlorodincarb, famoxadon, fenamidon;
   - complex-III-inhibitors at the Qᵢ-site: cyazofamid, amisulbrom;
   - complex-II-inhibitors (for example carboxamides): benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthio-biphenyl-2-yl)-3-difluoromethyl-1-methyl-1 H-pyrazole-4-carboxamide, N-(2-(1,3,3-trimethylbutyl)phenyl)-1,3-dimethyl-5-fluoro-1 H-pyrazole-4-carboxamide and N-[9-(dichloromethylene)-1,2,3,4-tetrahyd ro-1,4-methanonaphthalen-5-yl]-3-(difluoromethyl)-1-methyl-1 H-pyrazole-4-carboxamide;
   - other respiration inhibitors (for example complex I, decouplers): diflumetorim; nitrophenyl derivatives: binapacryl, dinobuton, dinocap, fluazinam; ferimzone; organometal compounds: fentin salts such as fentin acetate, fentin chloride or fentine hydroxide; ametoctradin; and silthiofam;
B) Sterol biosynthesis inhibitors (SBI fungicides)
   - C14-demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole; imidazoles: imazalil, pefurazoate, prochloraz, triflumizole; pyrimidines, pyridines and piperazines: fenarimol, nuarimol, pyrifenox, triforine;
   - delta14-reductase inhibitors: aldimorph, dodemorph, dodemorph acetate, fenpropimorph, tridemorph, fenpropidin, piperalin, spiroxamine;
   - 3-ketoreductase inhibitors: fenhexamid;
C) Nucleic acid synthesis inhibitors
   - phenylamides or acylamino acid fungicides: benalaxyl, benalaxyl-m, kiralaxyl, metalaxyl, metalaxyl-M (mefenoxam), ofurace, oxadixyl;
   - others: hymexazole, octhilinone, oxolinic acid, bupirimate;
D) Cell division and cytoskeleton inhibitors
   - tubulin inhibitors such as benzimidazoles, thiophanates: benomyl, carbendazim, fuberidazole, thiabendazole, thiophanate-methyl; triazolopyrimidines: 5-chloro-7-(4-methyl-piperidin-1-yl)-6-(2,4,6-trifluorophenyl)-[1,2,4]triazolo[1,5-a]pyrimidine;
   - further cell division inhibitors: diethofencarb, ethaboxam, pencycuron, fluopicolid, zoxamid, metrafenon, pyriofenon;
E) Amino acid synthesis and protein synthesis inhibitors
   - methionine synthesis inhibitors (anilinopyrimidines): cyprodinil, mepanipyrim, pyrimethanil;
   - protein synthesis inhibitors: blasticidin-S, kasugamycin, kasugamycin hydrochloride hydrate, mildiomycin, streptomycin, oxytetracyclin, polyoxin, validamycin A;
F) Signal transduction inhibitors
   - MAP/histidine kinase inhibitors: fluoroimide, iprodione, procymidone, vinclozolin, fenpiclonil, fludioxonil;
   - G-protein inhibitors: quinoxyfen;
G) Lipid and membrane synthesis inhibitors
   - phospholipid biosynthesis inhibitors: edifenphos, iprobenfos, pyrazophos, isoprothiolane;
   - lipid peroxidation: dicloran, quintozene, tecnazene, tolclofos-methyl, biphenyl, chloroneb, etridiazole;
   - phospholipid biosynthesis and cell wall attachment: dimethomorph, flumorph, mandipropamid, pyrimorph, benthiavalicarb, iprovalicarb, valifenalate and 4-fluorophenyl N-(1-(1-(4-cyanophenyl)ethanesulfonyl)but-2-yl)carbamate;
   - compounds which affect cell membrane permeability and fatty acids: propamocarb, propamocarb hydrochloride
H) "Multi-site" inhibitors
   - inorganic active substances: Bordeaux mixture, copper acetate, copper hydroxide, copper oxychloride, basic copper sulfate, sulfur;
   - thio- and dithiocarbamates: ferbam, mancozeb, maneb, metam, metiram, propineb, thiram, zineb, ziram;
   - organochlorine compounds (for example phthalimides, sulfamides, chloronitriles): anilazine, chlorothalonil, captafol, captan, folpet, dichlofluanid, dichlorophen, flusulfamide, hexachlorobenzene, pentachlorophenol and its salts, phthalid, tolylfluanid, N-(4-chloro-2-nitrophenyl)-N-ethyl-4-methylbenzenesulfonamide;
   - guanidines and others: guanidine, dodine, dodine-free base, guazatin, guazatin acetate, iminoctadin, iminoctadin triacetate, iminoctadin tris(albesilate), dithianon;
I) Cell wall biosynthesis inhibitors
   - glucan synthesis inhibitors: validamycin, polyoxin B; melanin synthesis inhibitors: pyroquilon, tricyclazole, carpropamid, dicyclomet, fenoxanil;
J) Resistance inductors
   - acibenzolar-S-methyl, probenazol, isotianil, tiadinil, prohexadione-calcium; phosphonates: fosetyl, fosetyl-aluminum, phosphorous acid and its salts;
K) Unknown mode of action
   - bronopol, quinomethionate, cyflufenamid, cymoxanil, dazomet, debacarb, diclomezin, difenzoquat, difenzoquat-methyl sulfate, diphenylamine, fenpyrazamine, flumetover, flusulfamid, flutianil, methasulfocarb, nitrapyrin, nitrothal-isopropyl, oxine-copper, proquinazid, tebufloquin, tecloftalam, triazoxide, 2-butoxy-6-iodo-3-propylchromene-4-one, N-(cyclopropylmethoxyimino-(6-difluoromethoxy-2,3-difluorophenyl)methyl)-2-phenyl-acetamide, N'-(4-(4-chloro-3-trifluoromethylphenoxy)-2,5-dimethylphenyl)-N-ethyl-N-methylformamidine, N'-(4-(4-fluoro-3-trifluoromethylphenoxy)-2,5-dimethylphenyl)-N-ethyl-N-methylformamidine, N'-(2-methyl-5-trifluoromethyl-4-(3-trimethylsilanylpropoxy)phenyl)-N-ethyl-N-methylformamidine, N'-(5-difluoromethyl-2-methyl-4-(3-trimethylsilanylpropoxy)-phenyl)-N-ethyl-N-methylformamidine, N-methyl-(1,2,3,4-tetrahydronaphthalen-1-yl)-2-{1-[2-(5-methyl-3-trifluoromethylpyrazol-1-yl)acetyl]piperidin-4-yl}thiazole-4-carboxamide, N-methyl-(R)-1,2,3,4-tetrahydronaphthalen-1-yl 2-{1-[2-(5-methyl-3-trifluoromethylpyrazol-1-yl)-acetyl]piperidin-4-yl}thiazole-4-carboxamide, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1 H-pyrazol-1-yl]ethanone, 6-tert.-butyl-8-fluoro-2,3-dimethylquinolin-4-yl methoxyacetate, *N*-methy)-2-{1-[(5-methyl-3-trifluoromethyl-1 H-pyrazol-1-yl)acetyl]piperidin-4-yl}-*N*-[(1R)-1,2,3,4-tetrahydronaphthalen-1-yl]-4-thiazolecarboxamide, 3-[5-(4-methylphenyl)-2,3-dimethylisoxazolidin-3-yl]-pyridine, 3-[5-(4-chlorophenyl)-2,3-dimethylisoxazolidin-3-yl]-pyridine (pyrisoxazol), N-(6-methoxypyridin-3-yl) cyclopropanecarboxamide, 5-chloro-1-(4,6-dimethoxypyrimidin-2-yl)-2-methyl-1H-benzoimidazole, 2-(4-chlorophenyl)-N-[4-(3,4-dimethoxyphenyl)isoxazol-5-yl]-2-prop-2-ynyloxyacetamide;
M) Growth regulators
   - abscisic acid, amidochlor, ancymidole, 6-benzylaminopurine, brassinolide, butralin, chlormequat (chlormequat chloride), choline chloride, cyclanilid, daminozide, dikegulac, dimethipin, 2,6-dimethylpuridine, ethephon, flumetralin, flurprimidol, fluthiacet, forchlorfenuron, gibberellic acid, inabenfid, indole-3-acetic acid, maleic hydrazide, mefluidid, mepiquat (mepiquat chloride), metconazole, naphthaleneacetic acid, N-6-benzyladenine, paclobutrazole, prohexadione (prohexadione-calcium), prohydrojasmone, thidiazuron, triapenthenol, tributylphosphorotrithioate, 2,3,5-triiodobenzoic acid, trinexapac-ethyl and uniconazole;
N) **Herbicides**
   - acetamides: acetochlor, alachlor, butachlor, dimethachlor, dimethenamid, flufenacet, mefenacet, metolachlor, metazachlor, napropamid, naproanilid, pethoxamid, pretilachlor, propachlor, thenylchlor;
   - amino acid analogs: bilanafos, glyphosate, glufosinate, sulfosate;
   - aryloxyphenoxypropionates: clodinafop, cyhalofop-butyl, fenoxaprop, fluazifop, haloxyfop, metamifop, propaquizafop, quizalofop, quizalofop-P-tefuryl;
   - bipyridyls: diquat, paraquat;
   - carbamates and thiocarbamates: asulam, butylate, carbetamide, desmedipham, dimepiperat, eptam (EPTC), esprocarb, molinate, orbencarb, phenmedipham, prosulfocarb, pyributicarb, thiobencarb, triallate;
   - cyclohexanediones: butroxydim, clethodim, cycloxydim, profoxydim, sethoxydim, tepraloxydim, tralkoxydim;
   - dinitroanilines: benfluralin, ethalfluralin, oryzalin, pendimethalin, prodiamine, trifluralin;
   - diphenyl ethers: acifluorfen, aclonifen, bifenox, diclofop, ethoxyfen, fomesafen, lactofen, oxyfluorfen;
   - hydroxybenzonitriles: bromoxynil, dichlobenil, ioxynil;
   - imidazolinones: imazamethabenz, imazamox, imazapic, imazapyr, imazaquin, imazethapyr;
   - phenoxyacetic acids: clomeprop, 2,4-dichlorophenoxyacetic acid (2,4-D), 2,4-DB, dichlorprop, MCPA, MCPA-thioethyl, MCPB, mecoprop;
   - pyrazines: chloridazon, flufenpyr-ethyl, fluthiacet, norflurazon, pyridate;
   - pyridines: aminopyralid, clopyralid, diflufenican, dithiopyr, fluridone, fluroxypyr, picloram, picolinafen, thiazopyr;
   - sulfonylureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propylimidazo[1,2-b]pyridazin-3-yl)sulfonyl)-3-(4,6-dimethoxypyrimidin-2-yl)urea;
   - triazines: ametryne, atrazine, cyanazine, dimethametryne, ethiozine, hexazinone, metamitron, metribuzine, prometryne, simazine, terbuthylazine, terbutryne, triaziflam;
   - ureas: chlortoluron, daimuron, diuron, fluometuron, isoproturon, linuron, methabenzthiazuron, tebuthiuron;
   - other acetolactate synthase inhibitors: bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalide, pyriminobac-methyl, pyrimisulfan, pyrithiobac, pyroxasulfon, pyroxsulam;
   - others: amicarbazone, aminotriazole, anilofos, beflubutamid, benazolin, bencarbazone, benfluresate, benzofenap, bentazone, benzobicyclon, bromacil, bromobutide, butafenacil, butamifos, cafenstrole, carfentrazone, cinidon-ethyl, chlorthal, cinmethylin, clomazone, cumyluron, cyprosulfamid, dicamba, difenzoquat, diflufenzopyr, *Drechslera monoceras,* endothal, ethofumesate, etobenzanid, fentrazamide, flumiclorac-pentyl, flumioxazin, flupoxam, fluorochloridon, flurtamon, indanofan, isoxaben, isoxaflutol, lenacil, propanil, propyzamide, quinclorac, quinmerac, mesotrione, methylarsenic acid, naptalam, oxadiargyl, oxadiazone, oxaziclomefon, pentoxazone, pinoxaden, pyraclonil, pyraflufen-ethyl, pyrasulfotol, pyrazoxyfen, pyrazolynate, quinoclamin, saflufenacil, sulcotrione, sulfentrazone, terbacil, tefuryltrione, tembotrione, thiencarbazone, topramezone, 4-hydroxy-3-[2-(2-methoxyethoxy-methyl)-6-trifluoromethylpyridin-3-carbonyl]bicyclo[3.2.1]oct-3-en-2-one, ethyl (3-[2-chloro-4-fluoro-5-(3-methyl-2,6-dioxo-4-trifluoromethyl-3,6-dihydro-2H-pyrimidin-1-yl)phenoxy]pyridin-2-yloxy)acetate, methyl 6-amino-5-chloro-2-cyclopropylpyrimidine-4-carboxylate, 6-chloro-3-(2-cyclopropyl-6-methylphenoxy)pyridazin-4-ol, 4-amino-3-chloro-6-(4-chlorophenyl)-5-fluoropyridin-2-carboxylic acid, methyl 4-amino-3-chloro-6-(4-chloro-2-fluoro-3-methoxy-phenyl)pyridin-2-carboxylate and methyl 4-amino-3-chloro-6-(4-chloro-3-dimethylamino-2-fluorophenyl)pyridin-2-carboxylate;
O) Insecticides
   - organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphosmethyl, profenofos, prothiofos, sulprophos, tetrachlorvinphos, terbufos, triazophos, trichlorfon;
   - carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
   - pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin,
   - insect growth inhibitors: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazin; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramate;
   - nicotine receptor agonists/antagonists: clothianidin, dinotefuran, imidacloprid, thiamethoxam, nitenpyram, acetamiprid, thiacloprid, 1-(2-chlorothiazol-5-ylmethyl)-2-nitrimino-3,5-dimethyl-[1,3,5]triazinane;
   - GABA antagonists: endosulfan, ethiprole, fipronil, vaniliprole, pyrafluprole, pyriprole, N-5-amino-1-(2,6-dichloro-4-methylphenyl)-4-sulfinamoyl-1 H-pyrazole-3-thiocarboxamide;
   - macrocyclic lactones: abamectin, emamectin, milbemectin, lepimectin, spinosad, spinetoram;
   - mitochondrial electron transport chain inhibitor (METI) I acaricides: fenazaquin, pyridaben, tebufenpyrad, tolfenpyrad, flufenerim;
   - METI II and III substances: acequinocyl, fluacyprim, hydramethylnone;
   - decouplers: chlorfenapyr;
   - inhibitors of oxidative phosphorylation: cyhexatin, diafenthiuron, fenbutatin oxide, propargite;
   - insect ecdysis inhibitors: cryomazine;
   - 'mixed function oxidase' inhibitors: piperonyl butoxide;
   - sodium channel blockers: indoxacarb, metaflumizone;
   - others: benclothiaz, bifenazate, cartap, flonicamid, pyridalyl, pymetrozin, sulfur, thiocyclam, flubendiamide, chlorantraniliprole, cyazypyr (HGW86); cyenopyrafen, flupyrazofos, cyflumetofen, amidoflumet, imicyafos, bistrifluron and pyrifluquinazone.

Examples of **inorganic fertilizers** are customary fertilizer components, nitrogen sources which may be used being, for example, ammonium sulfate, ammonium nitrate, ammonium chloride, ammonia sulfa-nitrate, urea, cyanamide, dicyandiamide, sodium nitrate, Chile saltpetre or calcium nitrate, and slow-release fertilizers such as oxamide, urea/formaldehyde condensates, urea/acetaldehyde condensates or urea/glyoxal condensates, for example Ureaform, acetylene diurea, isobutylidene diurea or crotonylidene diurea. Compounds which comprise one or more of the plant nutrients phosphorus, potassium, magnesium, calcium or sulfur, and compounds which comprise the trace elements boron, iron, copper, zinc, manganese or molybdenum, may also be present. Examples of such compounds are monoammonium phosphate, diammonium phosphate, superphosphate, Thomas meal, triple superphosphate, dicalcium phosphate, potassium phosphate, partially or fully digested crude phosphates, potassium nitrate, potassium chloride, potassium sulfate, dipotassium phosphate, magnesium sulfate, magnesium chloride, kieserite, dolomite, chalk, colemanite, boric acid, borax, iron sulfate, copper sulfate, zinc sulfate, manganese sulfate, ammonium molybdate or similar substances.

Preferably, the agrochemical active substance comprises a water-insoluble first pesticide. The first pesticide will in most cases be soluble in water to no more than 10 g/l at 20°C, preferably to no more than 1 g/l and in particular to no more than 0.5 g/l. The skilled worker can simply select pesticides with a suitable solubility from the above pesticide list.

The water-insoluble pesticide usually has a boiling point of above 30°C, preferably above 40°C and specifically above 45°C.

Preferred water-insoluble first pesticides are saflufenacil, dimethenamid-p, pendimethalin, picolinafen, pyraclostrobin, fipronil, metaflumizon, water-insoluble azole fungicides and water-insoluble auxin esters (such as alkyl esters of 2,4-D, for example the 2-ethylhexyl, isobutyl, isooctyl ester of 2,4-D). Water-insoluble azole fungicides can, depending on the desired solubility, be selected among triazoles (such as azaconazole, bitertanol, bromuconazole, cyproconazole, difenoconazole, dini-conazole, diniconazole-M, epoxiconazole, fenbuconazole, fluquinconazole, flusilazol, flutriafol, hexaconazole, imibenconazole, ipconazole, metconazole, myclobutanil, oxpoconazole, paclobutrazol, penconazole, propiconazole, prothioconazole, simeconazole, tebuconazole, tetraconazole, triadimefon, triadimenol, triticonazole, uniconazole); imidazoles (such as cyazofamid, imazalil, imazalil sulfate, pefurazoate, prochloraz, triflumizole); benzimidazoles: benomyl, carbendazim, fuberidazole, thiabendazole; or other azoles (such as ethaboxam, etridiazole, hymexazole, 2-(4-chlorophenyl)-N-[4-(3,4-dimethoxyphenyl)isoxazol-5-yl]-2-prop-2-ynyloxyacetamid), with the triazoles being preferred.

The agrochemical active substance especially preferably comprises a) a water-insoluble first pesticide and b) a water-soluble second pesticide or a water-soluble inorganic fertilizer.

The **water-soluble second pesticide** will in most cases be soluble in water to more than 10 g/l at 20°C. Preferably, it is soluble in water to more than 50 g/l, in particular more than 100 g/l. The skilled worker can simply select pesticides with a suitable solubility from the above pesticide list. The second pesticide is preferably a herbicide and/or a growth regulator, with herbicides being especially preferred. Mixtures of different water-soluble salts of a second pesticide are likewise possible.

Preferred water-soluble second pesticides are glyphosate, glufosinate, 2,4-D, dicamba, paraquat, diquat, chlormequat and mepiquat. Preferred second pesticides are glyphosate (for example as the free acid, the sodium salt, the sesquisodium salt, the potassium salt, the dipotassium salt, the ammonium salt, the diammonium salt, the dimethyl ammonium salt, the trimesium salt or the isopropylamine salt), glufosinate (for example as the ammonium salt), 2,4-D (for example as the ammonium, C₁-C₁₂-alkylammonium or sodium salt) and dicamba (for example as the diglycolamine, dimethylammonium, diolamine, olamine, potassium, sodium, trolamine salt). The second pesticide especially preferably comprises glyphosate (for example as the potassium salt, ammonium salt, isopropylamine salt).

The water-soluble **inorganic fertilizer** is in most cases soluble in water to more 10 g/l at 20°C. Preferably, it is soluble in water to more than 50 g/l, in particular more than 100 g/l. The skilled worker can simply select fertilizers with a suitable solubility from the above fertilizer list. Preferred inorganic fertilizers are sulfates, phosphates or nitrates, in particular ammonium sulfate, ammonium nitrate, and/or ammonium phosphate.

The composition according to the invention usually comprises from 0.5 to 99% by weight, preferably 5 to 85% by weight and in particular 15 to 70% by weight of agrochemical active substances such as pesticides and/or inorganic fertilizers.

The composition according to the invention usually comprises from 0.5 to 70% by weight, preferably 1 to 50% by weight and in particular 1 to 30% by weight water-insoluble first pesticide.

The composition according to the invention normally comprises at least 5% by weight, preferably at least 10% by weight, and in particular at least 20% by weight of the water-soluble second pesticide or of the water-soluble, inorganic fertilizer. The composition according to the invention normally comprises 1 to 80% by weight, preferably 5 to 65% by weight, and in particular 15 to 45% by weight of the water-soluble second pesticide or of the water-soluble, inorganic fertilizer.

The weight ratio of water-insoluble first pesticide to terpolymer can vary within any range, for example in the range of from 1:10 000 to 10 000:1, preferably in the range of from 1:1000 to 1000:1, especially preferably in the range of from 1:100 to 100:1.

The composition according to the invention is preferably present in the form of an agrochemical composition. Usual types of agrochemical compositions are, for example, solutions, emulsions, suspensions, dusts, powders, pastes and granules. Examples of types of compositions here are suspensions (SC, OD, FS), emulsifiable concentrates (EC), emulsions (EW, EO, ES), pastes, pills, wettable powders or dusts (WP, SP, SS, WS, DP, DS) or granules (GR, FG, GG, MG), which can either be soluble or dispersible (wettable) in water, and gels for the treatment of plant propagation materials such as seed (GF). The agrochemical compositions are prepared in the known manner (see for example Mollet, H. and Grubemann, A.: Formulation technology (Wiley VCH Verlag, Weinheim, 2001)).

The agrochemical compositions can furthermore also comprise conventional adjuvants which are conventionally used for plant protection products, the choice of the adjuvants depending on the specific use form or the active substance. Examples of suitable adjuvants are solvents, solid carriers, surface-active substances (such as further solubilizers, protective colloids, wetters and adhesives), organic and inorganic thickeners, bactericides, antifreeze agents, antifoams, optionally colorants and stickers (for example for the treatment of seed).

Suitable solvents are water, organic solvents such as mineral oil fractions of medium to high boiling point such as kerosene, and diesel oil, furthermore coal tar oils and oils of vegetable or animal origin, aliphatic, cyclic and aromatic hydrocarbons, for example paraffins, tetrahydronaphthalene, alkylated naphthalenes and their derivatives, alkylated benzenes and their derivatives, alcohols such as methanol, ethanol, propanol, butanol and cyclohexanol, glycols, ketones such as cyclohexanone, gamma-butyrolactone, dimethyl fatty acid amides, fatty acids and fatty acid esters and strongly polar solvents, for example amines such as N-methylpyrrolidone. In principle, it is also possible to use solvent mixtures and mixtures of the abovementioned solvents and water.

Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas and products of vegetable origin such as cereal meal, tree bark meal, wood meal and nutshell meal, cellulose powders or other solid carriers.

Suitable **surface-active substances** (adjuvants, wetters, adhesives, dispersants or emulsifiers) are the alkali, alkaline-earth, ammonium salts of aromatic sulfonic acids, for example of lignosulfonic acid (Borresperse^{®} types, Borregaard, Norway), phenolsulfonic acid, naphthalenesulfonic acid (Morwet^{®} types, Akzo Nobel, USA) and dibutylnaphthalenesulfonic acid (Nekal^{®} types, BASF, Germany), and of fatty acids, alkyl- and alkylarylsulfonates, alkyl sulfates, lauryl ether sulfates and fatty alcohol sulfates, and salts of sulfated hexa-, hepta- and octadecanols and of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ethers, ethoxylated isooctyl-, octyl- or nonylphenol, alkylphenyl polyglycol ethers, tributylphenyl polyglycol ethers, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin sulfite waste liquors and proteins, denatured proteins, polysaccharides (for example methylcellulose), hydrophobic-modified starches, polyvinyl alcohol (Mowiol^{®} types, Clariant, Switzerland), polycarboxylates (Sokalan^{®} types, BASF, Germany), polyalkoxylates, polyvinylamine (Lupamin^{®} types, BASF, Germany), polyethyleneimine (Lupasol^{®} types, BASF, Germany), polyvinylpyrrolidone and their copolymers.

Examples of **thickeners** (i.e. compounds which impart a modified flow behavior to the composition, i.e. high viscosity at rest and low viscosity in the agitated state) are polysaccharides and organic and inorganic layer minerals such as xanthan gum (Kelzan^{®}, CP Kelco, USA), Rhodopol^{®} 23 (Rhodia, France) or Veegum^{®} (R.T. Vanderbilt, USA) or Attaclay^{®} (Engelhard Corp., NJ, USA).

Bactericides may be added to stabilize the composition. Examples of bactericides are those based on dichlorophene and benzyl alcohol hemiformal (Proxel^{®} from ICI or Acticide^{®} RS from Thor Chemie and Kathon^{®} MK from Rohm & Haas) and also isothiazolinone derivatives such as alkylisothiazolinones and benzisothiazolinones (Acticide^{®} MBS from Thor Chemie). Examples of suitable antifreeze agents are ethylene glycol, propylene glycol, urea and glycerol. Examples of antifoams are silicone emulsions (such as, for example, Silikon^{®} SRE, Wacker, Germany, or Rhodorsil^{®}, Rhodia, France), long-chain alcohols, fatty acids, salts of fatty acids, organofluorine compounds and their mixtures. Examples of colorants are pigments, which are sparingly soluble in water, but also dyes, which are soluble in water. Examples of stickers are polyvinylpyrrolidone, polyvinyl acetate, polyvinyl alcohol and cellulose ethers (Tylose^{®}, Shin-Etsu, Japan).

Examples of types of compositions are:
1. Types of compositions for dilution in water
   i) Water-soluble concentrates (SL, LS)
      10 parts by weight of the active substances are dissolved in 90 parts by weight of water or a water-soluble solvent. Alternatively, wetters or other excipients are added. This gives a composition with an active substance content of 10% by weight.
   ii) Dispersible concentrates (DC)
      20 parts by weight of the active substances are dissolved in 70 parts by weight of cyclohexanone with addition of 10 parts by weight of a dispersant, for example polyvinylpyrrolidone. Upon dilution in water, a dispersion is obtained. The active substance content is 20% by weight.
   iii) Emulsifiable concentrates (EC)
      15 parts by weight of the active substances are dissolved in 75 parts by weight of xylene with addition of calcium dodecylbenzenesulfonate and castor oil ethoxylate (in each case 5 parts by weight). Upon dilution in water, an emulsion is obtained. The composition has an active substance content of 15% by weight.
   iv) Emulsions (EW, EO, ES)
      25 parts by weight of the active substances are dissolved in 35 parts by weight of xylene with addition of calcium dodecylbenzenesulfonate and castor oil ethoxylate (in each case 5 parts by weight). Using an emulsifier apparatus (for example Ultra-Turrax), this mixture is placed into 30 parts by weight of water and made into a homogeneous emulsion. Upon dilution in water, an emulsion is obtained. The composition has an active substance content of 25% by weight.
   v) Suspensions (SC, OD, FS)
      20 parts by weight of the active substances are comminuted in a stirred ball mill, with addition of 10 parts by weight of dispersants and wetters and 70 parts by weight of water or an organic solvent, to give a fine active substance suspension. Upon dilution in water, a stable suspension of the active substance is obtained. The active substance content in the composition is 20% by weight.
   vi) Water-dispersible and water-soluble granules (WG, SG)
      50 parts by weight of the active substances are ground finely, with addition of 50 parts by weight of dispersants and wetters, and prepared as water-dispersible or water-soluble granules by means of technical apparatuses (for example extrusion, spray tower, fluidized bed). Upon dilution in water, a stable dispersion or solution of the active substance results. The compositon has an active susbtance content of 50% by weight.
   vii) Water-dispersible and water-soluble powders (WP, SP, SS, WS)
      75 parts by weight of the active substances are ground in a rotor-stator mill with addition of 25 parts by weight of dispersants and wetters and also silica gel. Upon dilution in water, a stable dispersion or solution of the active substance results. The active substance content of the composition is 75% by weight.
   viii) Gels (GF)
      In a ball mill, 20 parts by weight of the active substances, 10 parts by weight of dispersant, 1 part by weight of swelling agent and 70 parts by weight of water or of an organic solvent are ground to a fine suspension. Upon dilution with water, a stable suspension with an active substance content of 20% by weight is obtained.
2. Types of compositions for direct application
   ix) Dusts (DP, DS)
      5 parts by weight of the active substances are ground finely and mixed intimately with 95 parts by weight of finely divided kaolin. This gives dust with an active substance content of 5% by weight.
   x) Granules (GR, FG, GG, MG)
      0.5 part by weight of the active substances are ground finely and combined with 99.5 parts by weight of carriers. Current methods in this context are extrusion, spray drying or the fluidized bed. This gives granules for direct application with an active substance content of 0.5% by weight.
   xi) ULV solutions (UL)
      10 parts by weight of the active substances are dissolved in 90 parts by weight of an organic solvent, for example xylene. This gives a composition for direct application with an active substance content of 10% by weight.

The composition according to the invention is preferably in the form of an aqueous composition (such as SC), where the water-insoluble pesticide is present in the form of suspended particles. The water content may be at least 10% by weight, preferably at least 30% by weight. The suspended particles may be present in the form of crystalline or amorphous particles which are solid at 20°C. The suspended water-insoluble pesticide usually has a particle size distribution with an x₅₀ value of from 0.1 to 10 µm, preferably 0.2 µm to 5 µm and especially preferably 0.5 µm to 2 µm. The particle size distribution can be determined by laser light diffraction of an aqueous suspension comprising the particles. The sample preparation, for example the dilution to the measuring concentration, will, in this measuring method, depend on the fineness and concentration of the active substances in the suspension sample and on the apparatus used (for example Malvern Mastersizer), inter alia. The procedure must be developed for the system in question and is known to a person skilled in the art.

A further subject matter is, therefore, seed comprising the composition according to the invention. To treat plant propagation materials, in particular seed, it is customary to use water-soluble concentrates (LS), suspensions (FS), dusts (DS), water-dispersible and water-soluble powders (WS, SS), emulsions (ES), emulsifiable concentrates (EC) and gels (GF). These compositions can be applied to the propagation materials, in particular seed, in undiluted or, preferably, diluted form. Here, the composition in question can be diluted 2- to 10-fold so that from 0.01 to 60% by weight, preferably from 0.1 to 40% by weight, of active substance are present in the compositions to be used for seed dressing. The application can be carried out before or during the sowing. The treatment of plant propagation material, in particular treatment of seed, is know to a person skilled in the art and is performed by dusting, coating, pelleting, dipping or immersing the plant propagation material, the treatment preferably being carried out by pelleting, coating and dusting or by the in-furrow treatment, so that for example premature germination of the seed is prevented. It is preferred to use suspensions for the seed treatment. Usually, such compositions comprise from 1 to 800 g/l active substance, from 1 to 200 g/l surfactants, from 0 to 200 g/l antifreeze agents, from 0 to 400 g/l binders, from 0 to 200 g/l colorants and solvents, preferably water.

The active substance concentrations in the ready-to-use preparations can be varied within substantial ranges. In general, they are between 0.0001 and 10%, preferably between 0.01 and 1 %. The active substances can also be used successfully in the ultra-low-volume method (ULV), it being possible to apply compositions with more than 95% by weight of active substance, or indeed the active substance without additives. For use in plant protection, the application rates are between 0.001 and 2.0 kg of active substance per ha, preferably between 0.005 and 2 kg per ha, especially preferably between 0.05 and 0.9 kg per ha, in particular between 0.1 and 0.75 kg per ha, depending on the nature of the desired effect. When treating plant propagation materials, for example seed, amounts of active substance of from 0.1 to 1000 g/100 kg of propagation material or seed, preferably from 1 to 1000 g/100 kg, especially preferably from 1 to 100 g/100 kg, in particular from 5 to 100 g/100 kg, will generally be used. When used in the protection of materials or storage materials, the application rate of active substance depends on the nature of the field of application and on the desired effect. Conventional application rates in the protection of materials are, for example, from 0.001 g to 2 kg, preferably from 0.005 to 1 kg, of active substance per cubic meter of treated material.

Substances which may be admixed to the active substances or to the compositions comprising them are various types of oils, or wetters, adjuvants, herbicides, bactericides, other fungicides and/or pesticides, optionally also only just before use (tankmix). These agents can be admixed to the compositions according to the invention in the weight ratio 1:100 to 100:1, preferably 1:10 to 10:1. Adjuvants in this sense which are suitable are, in particular: organically modified polysiloxanes, for example Break Thru S 240^{®}; alcohol alkoxylates, for example Atplus^{®} 245, Atplus^{®} MBA 1303, Plurafac^{®} LF 300 and Lutensol^{®} ON 30; EO-PO block polymers, for example Pluronic^{®} RPE 2035 and Genapol^{®} B; alcohol ethoxylates, for example Lutensol^{®} XP 80; and sodium dioctylsulfosuccinate, for example Leophen^{®} RA.

A further subject is a method of preparing the composition according to the invention by bringing the terpolymer and the agrochemical active substance into contact, for example by mixing. The abovementioned auxiliaries can optionally also be brought into contact with the composition. Further preparation methods for various types of compositions are as described above.

A further object is the use of the terpolymer for dispersing agrochemical active substances. The terpolymer is preferably used for suspending. Preferred agrochemical active substances are as described above.

The present invention furthermore relates to a non-therapeutical method of controlling phytopathogenic fungi and/or undesirable vegetation and/or undesired insect or mite attack and/or for regulating the growth of plants, wherein the composition according to the invention is allowed to act on the respective pests, their environment or the crop plants to be protected from the respective pest, on the soil and/or on undesired plants and/or on the crop plants and/or on their environment. The term crop plants also includes those plants which have been modified by breeding, mutagenesis or recombinant methods, including the biotechnological agricultural products which are on the market or in the process of being developed. Genetically modified plants are plants whose genetic material has been modified in a manner which does not occur under natural conditions by hybridizing, mutations or natural recombination (i.e. recombination of the genetic material). Here, one or more genes will, as a rule, be integrated into the genetic material of the plant in order to improve the plant's properties. Such genetic modifications also comprise posttranslational modifications of proteins, oligo- or polypeptides, for example by means of glycosylation or binding of polymers such as, for example, prenylated, acetylated or farnesylated residues or PEG residues.

**Advantages** of the present invention are, inter alia, that it makes a high storage stability of the formulation possible; that the particle size growth of dispersed agrochemical active substances is slowed down or suppressed; that the agglomeration of dispersed agrochemical particles is slowed down or suppressed; that the settling of dispersed agrochemical active substances is slowed down or suppressed; that the abovementioned advantages are also attained in the presence of high salt concentrations; and that that the abovementioned advantages are also attained in the presence of concentrations of water-soluble pesticides or water-soluble fertilizers. Further advantages of the invention are, that the terpolymer may be free of expensive macromonomers, which need to be synthesized in an additional step before the polymerisation of the terpolymer; the the terpolymer may be free of dangerous ether groups, which may tend to form explosive peroxides.

The examples which follow illustrate the invention without imposing any limitation.

### Examples

- Surfactant A:: Anionic surfactant, sodium salt of an alkylnaphthalenesulfonic acid, water-soluble.
- Surfactant B:: Nonionic surfactant, alkylamine ethoxylate, water-soluble, surface tension (1 g/l water, room temperature) approximately 40 mN/m.

### Example 1 - Terpolymer A

The terpolymer A was prepared by traditional free-radical polymerization in aqueous solution (analogously to DE 3743739 A1), based on the following monomers: 60% by weight of acrylic acid, 20% by weight of acrylamide, and 20% by weight of AMPS sodium salt. The initiator employed was an aqueous solution of sodium peroxodisulfate, and the regulator used was sodium hypophosphite. The base used was sodium hydroxide. This gave an aqueous solution of the random terpolymer (39% by weight) with an M_{w} of 20 000 g/mol (PDI 3) and a pH of 4.6.

### Example 2 - Formulation

14 g of pyraclostrobin, 2 g of terpolymer A from example 1, 2 g of surfactant A, 3.3 g of surfactant B, 13.1 g of glyphosate isopropylammonium salt (60% by weight in water), and 21.6 g of water were weighed into a vessel. 25 ml of glass beads (0.75-1.0 mm) were added, and an aqueous pyraclostrobin suspension was prepared by shaking on a laboratory shaker (4 h, 400 rpm). Thereafter, the glass beads were filtered off.

### Example 3 - Formulation (comparative experiment)

An aqueous suspension of pyraclostrobin was prepared as in example 2, the terpolymer of example 1 being replaced by
A) Atlox® 4915, or
B) Copolymer B (acrylic acid/AMPS 70/30).

Atlox® 4913 is a composition comprising 33% by weight of terpolymer (reaction product of methacrylic acid, methyl methacrylate and methoxypolyethylene glycol methacrylate), 33% by weight of propylene glycol, 1 % by weight of xylene and 33% by weight of water), HLB value 11-12, commercially available from Uniquema.

The random copolymer B was prepared analogously to example 1, based on the following monomers: 70% by weight of acrylic acid and 30% by weight of the sodium salt of acrylamidopropanesulfonic acid (AMPS).

### Example 4 - Stability test of the suspension

The aqueous suspensions of examples 2, 3A and 3B were stored without agitation for 24 hours at room temperature and thereafter assessed visually with reference to a scale of from 1 (phase separation, no longer dispersible by shaking, clumpy) to 10 (no phase separation, highly viscous, readily dispersible).

**Table 1:**

| Formulation of example | Stability assessment |
|---|---|
| 2 | 9 |
| 3A ^{a)} | 8 |
| 3B ^{a)} | 2 |

| | |
|---|---|
| a) comparative experiment | |

## Claims

1. A composition comprising an agrochemical active substance and a random terpolymer which comprises the monomers i), ii), iii) and optionally further monomers incorporated into the polymer, where
monomer i) comprises an olefinically unsaturated monomer comprising a sulfonic acid group and/or a salt thereof,
monomer ii) comprises (meth)acrylamide and/or an N-substituted derivative thereof, and
monomer iii) comprises a monoethylenically unsaturated C₃-C₈-carboxylic acid, an anhydride and/or a salt thereof,
wherein the terpolymer comprises 5 to 80% by weight of monomer i), 5 to 80% by weight of monomer ii), and 20 to 90% by weight of monomer iii), based on the total mass of all monomers of the terpolymer.

2. The composition according to claim 1, wherein the terpolymer comprises up to 5% by weight of the further monomers.

3. The composition according to claim 1 or 2, wherein the agrochemical active substance comprises a) a water-insoluble first pesticide and b) a water-soluble second pesticide or water-soluble inorganic fertilizer.

4. The composition according to any of claims 1 to 3, comprising at least 5% by weight of the second pesticide or of the inorganic fertilizer.

5. The composition according to any of claims 1 to 4, comprising from 1 to 20% by weight of the terpolymer.

6. The composition according to any of claims 1 to 5, wherein the terpolymer has a molar mass Mw of from 5000 to 100 000 g/mol.

7. The composition according to any of claims 1 to 6, wherein monomer ii) comprises acrylamide or methacrylamide.

8. The composition according to any of claims 1 to 7, comprising 6 to 60% by weight of monomer i), based on the total mass of all monomers of the terpolymer.

9. The composition according to any of claims 1 to 8 comprising 6 to 60% by weight of monomer ii), based on the total mass of all monomers of the terpolymer.

10. The composition according to any of claims 1 to 9 comprising 35 to 85% by weight of monomer iii), based on the total mass of all monomers of the terpolymer.

11. The composition according to any of claims 1 to 10, comprising, in total, no more than 95% by weight of monomer i) and monomer iii), based on the total mass of all monomers of the terpolymer.

12. The composition according to any of claims 1 to 11, comprising 2 to 40% by weight of monomer i), from 5 to 50% by weight of monomer ii), and as the remainder monomer iii) and/or further monomers.

13. A method of preparing the composition according to any of claims 1 to 12, by bringing the terpolymer and the agrochemical active substance into contact.

14. The use of the terpolymer according to any of claims 1 to 12 for dispersing agrochemical active substances.

15. A non-therapeutical method of controlling phytopathogenic fungi and/or undesired plant growth and/or undesired insect or mite attack and/or for regulating the growth of plants, wherein the composition according to any of claims 1 to 12 is allowed to act on the respective pests, their environment or the crop plants to be protected from the respective pest, on the soil and/or on undesired plants and/or on the crop plants and/or on their environment.

16. Seed comprising the composition according to any of claims 1 to 12.

## Patentansprüche

1. Zusammensetzung enthaltend einen agrochemischen Wirkstoff und ein statistisches Terpolymer, welches die Monomere i), ii), iii), und optional weitere Monomeren einpolymerisiert enthält, wobei
Monomer i) ein olefinisch ungesättigtes Monomer enthaltend eine Sulfonsäuregruppe und/oder ein Salz davon umfasst,
Monomer ii) (Meth)Acrylamid, und/oder ein N-substituiertes Derivat davon umfasst, und
Monomer iii)eine monoethylenisch ungesättigte C₃-C₈-Carbonsäure, ein Anhydrid und/oder ein Salz davon umfasst,
wobei das Terpolymer 5 bis 80 Gew.-% Monomer i), 5 bis 80 Gew.-% Monomer ii) und 20 bis 90 Gew.-% Monomer iii), bezogen auf die Gesamtmasse aller Monomere des Terpolymers, umfasst.

2. Zusammensetzung nach Anspruch 1, wobei das Terpolymer bis zu 5 Gew.-% der weiteren Monomere umfasst.

3. Zusammensetzung nach Anspruch 1 oder 2, wobei der agrochemischen Wirkstoff a) ein wasserunlösliches erstes Pestizid und b) ein wasserlösliches zweites Pestizid oder wasserlösliches, anorganisches Düngemittel umfasst.

4. Zusammensetzung nach einem der Ansprüche 1 bis 3, enthaltend mindestens 5 Gew.-% des zweiten Pestizides oder des anorganischen Düngemittels.

5. Zusammensetzung nach einem der Ansprüche 1 bis 4, enthaltend 1 bis 20 Gew.-% des Terpolymers.

6. Zusammensetzung nach einem der Ansprüche 1 bis 5, wobei das Terpolymer eine Molmasse Mw von 5000 bis 100.000 g/mol hat.

7. Zusammensetzung nach einem der Ansprüche 1 bis 6, wobei Monomer ii) Acrylamid oder Methacrylamid umfasst.

8. Zusammensetzung nach einem der Ansprüche 1 bis 7, enthaltend 6 bis 60 Gew.-% Monomer i), bezogen auf die Gesamtmasse aller Monomere des Terpolymers.

9. Zusammensetzung nach einem der Ansprüche 1 bis 8, enthaltend 6 bis 60 Gew.-% Monomer ii), bezogen auf die Gesamtmasse aller Monomere des Terpolymers.

10. Zusammensetzung nach einem der Ansprüche 1 bis 9, umfassend 35 bis 85 Gew.-% Monomer iii), bezogen auf die Gesamtmasse aller Monomere des Terpolymers.

11. Zusammensetzung nach einem der Ansprüche 1 bis 10, enthaltend in der Summe höchstens 95 Gew.-% Monomer i) und Monomer iii), bezogen auf die Gesamtmasse aller Monomere des Terpolymers.

12. Zusammensetzung nach einem der Ansprüche 1 bis 11, enthaltend 2 bis 40 Gew.-% Monomer i), von 5 bis 50 Gew.-% Monomer ii) und als Rest Monomer iii) und/oder weitere Monomere.

13. Verfahren zur Herstellung der Zusammensetzung gemäß einem der Ansprüche 1 bis 12, indem man das Terpolymer und den agrochemischen Wirkstoff in Kontakt bringt.

14. Verwendung des Terpolymers gemäß einem der Ansprüche 1 bis 12 zur Dispergierung von agrochemischen Wirkstoffen.

15. Nichttherapeutisches Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung gemäß einem der Ansprüche 1 bis 12 auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

16. Saatgut enthaltend die Zusammensetzung gemäß einem der Ansprüche 1 bis 12.

## Revendications

1. Composition comprenant une substance active agrochimique et un terpolymère aléatoire qui comprend les monomères i), ii) et iii), et éventuellement d'autres monomères incorporés dans le polymère, où
le monomère i) comprend un monomère oléfiniquement insaturé comprenant un groupement acide sulfonique et/ou un sel de celui-ci,
le monomère ii) comprend du (méth)acrylamide et/ou un dérivé N-substitué de celui-ci, et
le monomère iii) comprend un acide C₃-C₈carboxylique monoéthyléniquement insaturé, un anhydride et/ou un sel de celui-ci,
dans laquelle le terpolymère comprend de 5 à 80% en poids de monomère i), de 5 à 80% en poids de monomère ii), et de 20 à 90% en poids de monomère iii), sur la base de la masse totale de tous les monomères du terpolymère.

2. Composition selon la revendication 1, dans laquelle le terpolymère comprend jusqu'à 5% en poids des autres monomères.

3. Composition selon la revendication 1 ou 2, dans laquelle la substance active agrochimique comprend a) un premier pesticide insoluble dans l'eau et b) un deuxième pesticide soluble dans l'eau ou un fertilisant inorganique soluble dans l'eau.

4. Composition selon l'une quelconque des revendications 1 à 3, comprenant au moins 5% en poids du deuxième pesticide ou du fertilisant inorganique.

5. Composition selon l'une quelconque des revendications 1 à 4, comprenant de 1 à 20% en poids du terpolymère.

6. Composition selon l'une quelconque des revendications 1 à 5, dans laquelle le terpolymère possède une masse molaire Mm allant de 5000 à 100 000 g/mol.

7. Composition selon l'une quelconque des revendications 1 à 6, dans laquelle le monomère ii) comprend de l'acrylamide ou du méthacrylamide.

8. Composition selon l'une quelconque des revendications 1 à 7, comprenant de 6 à 60% en poids de monomère i), sur la base de la masse totale de tous les monomères du terpolymère.

9. Composition selon l'une quelconque des revendications 1 à 8, comprenant de 6 à 60% en poids de monomère ii), sur la base de la masse totale de tous les monomères du terpolymère.

10. Composition selon l'une quelconque des revendications 1 à 9, comprenant de 35 à 85% en poids de monomère iii), sur la base de la masse totale de tous les monomères du terpolymère.

11. Composition selon l'une quelconque des revendications 1 à 10, comprenant, au total, pas plus de 95% en poids de monomère i) et de monomère iii), sur la base de la masse totale de tous les monomères du terpolymère.

12. Composition selon l'une quelconque des revendications 1 à 11, comprenant de 2 à 40% en poids de monomère i), de 5 à 50% en poids de monomère ii), et comme restant, le monomère iii) et/ou d'autres monomères.

13. Méthode de préparation de la composition selon l'une quelconque des revendications 1 à 12, par la mise en contact du terpolymère et de la substance active agrochimique.

14. Utilisation du terpolymère selon l'une quelconque des revendications 1 à 12, pour la dispersion de substances actives agrochimiques.

15. Méthode non thérapeutique de contrôle de champignons phytopathogènes et/ou d'une croissance végétale indésirable et/ou d'une attaque indésirable par des insectes ou des acariens et/ou de régulation de la croissance de plantes, dans laquelle on permet à la composition selon l'une quelconque des revendications 1 à 12 d'agir sur les nuisibles respectifs, leur environnement ou les plantes de culture à protéger contre le nuisible respectif, sur le sol et/ou sur les plantes indésirables et/ou sur les plantes de culture et/ou sur leur environnement.

16. Semence comprenant la composition selon l'une quelconque des revendications 1 à 12.
